# EUROPEAN PATENT APPLICATION

(11) **EP 4 407 741 A1**
(43) Date of publication of application: **31.07.2024**
(21) Application number: 22948479.5
(22) Date of filing: 30.06.2022
(51) Int. Cl.: H01M 10/42

(54) **BATTERY CELL, BATTERY, AND ELECTRIC DEVICE**

(71) Applicant: Contemporary Amperex Technology Co., Limited, Ningde, Fujian 352100 (CN)
(72) Inventor: CHEN, Wenwei, Ningde, Fujian 352100 (CN); LIU, Jiang, Ningde, Fujian 352100 (CN); HUANG, Ying, Ningde, Fujian 352100 (CN); LI, Quankun, Ningde, Fujian 352100 (CN)
(74) Representative: Ran, Handong
(86) International application number: PCT/CN2022/102715
(87) International publication number: WO 2024/000367

(57) **Abstract**

Provided in the embodiments of the present application are a battery cell, a battery and an electric device, which can effectively improve the performance of a battery without increasing the internal space of the battery. The battery cell comprises: at least two electrode assemblies (21), the surface of each of the at least two electrode assemblies (21) comprising a curved portion (211), and the curved portions (211) of the two electrode assemblies (21), which are adjacent, in the at least two electrode assemblies (21) forming an accommodation space (2111); and a lithium replenishment device (22), at least part of which is arranged in the accommodation space (2111).

## Description

### TECHNICAL FIELD

The present application relates to the field of battery technologies, and in particular, to a battery cell, a battery, and a power consumption apparatus.

### BACKGROUND

Energy conservation and emission reduction are the key to the sustainable development of the automotive industry. In this case, electric vehicles have become an important part of the sustainable development of the automotive industry due to their advantages of energy conservation and environmental protection. For the electric vehicles, the battery technology is an important factor for their development.

In the development of the battery technology, the performance of the battery is an issue that cannot be ignored. The performance of batteries not only affects the development and application of battery-related products, but also affects consumer acceptance of electric vehicles. Therefore, how to improve performance of a battery is an urgent problem to be solved.

### SUMMARY

Embodiments of the present application provide a battery cell, a battery, and a power consumption apparatus, which could effectively improve performance of the battery without increasing the internal space of the battery.

In a first aspect, a battery cell is provided, including: at least two electrode assemblies, a surface of each electrode assembly of the at least two electrode assemblies including a curved part, and curved parts of two adjacent electrode assemblies of the at least two electrode assemblies forming an accommodating space; and a lithium replenishing apparatus, at least part of the lithium replenishing apparatus being disposed in the accommodating space.

According to the embodiments of the present application, the battery cell includes a lithium replenishing apparatus, so that the lithium replenishing apparatus can not only replenish the loss of active lithium of a battery including the battery cell during use, improving the service life of the battery, but also replenish the loss of active lithium of the battery during the first charge, increasing the energy density of the battery. Further, according to this technical solution, at least part of the lithium replenishing apparatus is disposed in the accommodating space formed by the curved parts of two adjacent electrode assemblies, so that the lithium replenishing apparatus does not occupy the internal space of the battery cell to the greatest extent, further improving the energy density of the battery.

In some possible implementation manners, a shape of the lithium replenishing apparatus is cylindrical.

According to the above technical solution, the shape of the lithium replenishing apparatus is set to be cylindrical, the cylinder can be more easily disposed in the accommodating space, and the accommodating space can be utilized to the greatest extent.

In some possible implementation manners, the lithium replenishing apparatus is a lithium replenishing block.

According to the above technical feature, since the lithium replenishing block has a certain thickness, usually, the thicker the lithium replenishing apparatus is, the better the lithium replenishing effect is. That is, the lithium replenishing ability of the lithium replenishing apparatus 22 can be ensured, and the lithium replenishing effect of the lithium replenishing apparatus 22 is greatly improved.

In some possible implementation manners, an axis of the lithium replenishing apparatus is parallel to axes of the at least two electrode assemblies.

According to the above technical solution, since the axis of the electrode assembly is relatively long, by setting the axis of the lithium replenishing apparatus to be parallel to the axis of the electrode assembly, in this way, the size of the lithium replenishing apparatus can be made as large as possible, which further improves the lithium replenishing effect of the lithium replenishing apparatus.

In some possible implementation manners, at least part of the lithium replenishing apparatus fills up the accommodating space.

According to the above technical solution, the lithium replenishing apparatus fills up the accommodating space, that is, the size of the lithium replenishing apparatus is maximized without occupying the internal space of the battery cell, which avoids the situation of excessive loss of active lithium of the battery cell and insufficient active lithium replenished by the lithium replenishing apparatus, greatly improves the lithium replenishing effect of the lithium replenishing apparatus, and further effectively improves the performance of the battery.

In some possible implementation manners, each electrode assembly includes a first end face and a second end face opposite to each other, the first end face is provided with tabs, and the battery cell further includes: an end cover disposed towards the first end face and parallel to the first end face, the end cover being provided with a lithium replenishing electrode terminal, and the lithium replenishing electrode terminal being connected with the lithium replenishing apparatus.

According to the above technical solution, by providing a lithium replenishing electrode terminal connected with the lithium replenishing apparatus on the end cover, the purpose of replenishing the battery with lithium by the lithium replenishing apparatus can be realized, and further the performance of the battery can be improved.

In some possible implementation manners, the lithium replenishing apparatus includes a lithium replenishing agent, and the lithium replenishing agent is electrically connected with the lithium replenishing electrode terminal.

According to the above technical solution, the main function of the lithium replenishing agent is that the metal elemental lithium loses electrons, thereby forming lithium ions. The electrons reach the positive electrode or the negative electrode of the battery through a conductive assembly, and the positive active material or the negative active material get the electrons and are reduced. Meanwhile, the lithium ions can undergo an intercalation reaction at the positive electrode or the negative electrode through the ion channel provided by an electrolytic solution, thereby realizing the purpose of transferring active lithium from the lithium replenishing agent to the positive active material or the negative active material, and effectively ensuring the lithium replenishing effect.

In some possible implementation manners, the lithium replenishing apparatus further includes a conductive assembly, and the conductive assembly coats the lithium replenishing agent, where the conductive assembly is configured to electrically connect the lithium replenishing agent and the lithium replenishing electrode terminal.

By setting the conductive assembly, not only can it be relatively easy to electrically connect the lithium replenishing agent and the lithium replenishing electrode terminal, reducing the difficulty of the production process of the battery cell, but also electronic channels can be established for the lithium replenishing agent, the positive active material and the negative active material, so that the lithium replenishing apparatus can fully play the role of replenishing active lithium.

In some possible implementation manners, a shape of the conductive assembly is helical.

According to the above technical solution, a helical conductive assembly is adopted, which can increase the contact area between the conductive assembly and the lithium replenishing agent, and avoids the problem of the loss of the lithium replenishing ability of the lithium replenishing apparatus due to faults of the lithium replenishing agent and the conductive assembly in the subsequent reaction in the lithium replenishing process.

In some possible implementation manners, a side of the lithium replenishing apparatus facing the end cover is provided with a lead-out end, and the lead-out end is connected with the lithium replenishing electrode terminal.

According to the above technical solution, the lithium replenishing apparatus is connected with the lithium replenishing electrode terminal through the lead-out end, which realizes the connection between the lithium replenishing apparatus and the lithium replenishing electrode terminal in a relatively simple manner, and is conducive to simplifying the manufacturing process of the battery.

In some possible implementation manners, the end cover is further provided with a negative electrode terminal, and the negative electrode terminal is connected with the at least two electrode assemblies; where the lithium replenishing electrode terminal is configured to be short circuited with the negative electrode terminal when the lithium replenishing apparatus replenishes the battery cell with lithium.

According to the above technical solution, on the one hand, when the lithium replenishing apparatus replenishes the battery cell with lithium, that is, when the battery cell needs to be replenished with lithium, the lithium replenishing electrode terminal is short circuited with the negative electrode terminal, which avoids the problem of replenishing the battery cell with lithium by the lithium replenishing apparatus without a need to replenish lithium, thereby realizing the controllable lithium replenishment and on-demand lithium replenishment of the battery cell by the lithium replenishing apparatus. On the other hand, since lithium ions are relatively easily intercalated at the negative electrode relative to the positive electrode, the lithium replenishing electrode terminal is configured to be short circuited with the negative electrode terminal, which can significantly improve the lithium replenishing efficiency of the lithium replenishing apparatus.

In some possible implementation manners, the lithium replenishing electrode terminal is disposed on a side of the end cover close to the negative electrode terminal.

In this way, the connection line between the lithium replenishing electrode terminal and the negative electrode terminal can be the shortest, which is not only simple for implementation, but also reduces the production costs.

In some possible implementation manners, the surface of each electrode assembly further includes a planar part, the planar part is connected with the curved part, and planar parts of the two adjacent electrode assemblies are opposite to and connected with each other.

According to the above technical solution, the electrode assembly includes the planar part, which not only enables better contact between the planes, but also makes better use of the space of the battery cell, and thus, the energy density of the battery can be increased.

In a second aspect, a battery is provided, including: the battery cell in the above first aspect or each implementation manner of the first aspect; and a box, the box being configured to accommodate the battery cell.

In a third aspect, a power consumption apparatus is provided, including: the battery in the second aspect, the battery being configured to provide electric energy.

### BRIEF DESCRIPTION OF THE DRAWINGS

In order to illustrate the technical solutions in the embodiments of the present application more clearly, brief description will be made below to the accompanying drawings required in the embodiments of the present application. Apparently, the accompanying drawings described below are some embodiments of the present application only, and other drawings could be obtained based on these accompanying drawings by those ordinary skilled in this art without creative efforts.
FIG. 1 is a schematic diagram of a vehicle according to an embodiment of present application.
FIG. 2 is a schematic structural diagram of a battery according to an embodiment of present application.
FIG. 3 is an exploded view of a battery cell according to an embodiment of present application.
FIG. 4 is a sectional view of a battery cell according to an embodiment of present application.
FIG. 5 is an enlarged view of the battery cell shown in FIG. 4 at A.
FIG. 6 is a schematic diagram of a lithium replenishing apparatus according to an embodiment of present application.

In the accompanying drawings, the accompanying drawings are not drawn to actual scale.

### DESCRIPTION OF EMBODIMENTS

Implementation manners of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that, unless otherwise illustrated, "a plurality of' means two or more; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The terms representing orientations in the following description are all directions shown in the drawings, and do not limit the specific structure of the present application. In the description of the present application, it should be further noted that, unless explicitly specified and defined otherwise, terms "installation", "interconnection" and "connection" should be understood in a broad sense; for example, they may be either a fixed connection, or a detachable connection, or an integrated connection; and they may be either a direct connection, or an indirect connection through an intermediate medium. Those of ordinary skill in the art may appreciate the specific meanings of the foregoing terms in the present application according to specific conditions.

In the present application, the term "and/or" is only an association relation describing associated objects, which means that there may be three relations. For example, A and/or B may represent three situations: A exists alone, both A and B exist, and B exists alone. In addition, the character "/" in the present application generally indicates that the associated objects before and after the character are in an "or" relationship.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusions. The terms such as "first" and "second" in the specification and the claims of the present application as well as the drawings described above are used to distinguish different objects, and shall not be used to indicate a specific order or primary-secondary relationship.

The phrase "embodiment" mentioned in the present application means that the specific features, structures, or characteristics described with reference to the embodiment may be included in at least one embodiment of the present application. The phrase at various locations in the specification does not necessarily refer to the same embodiment, or an independent or alternative embodiment that is mutually exclusive from another embodiment. Those skilled in the art understand, in explicit and implicit manners, that the embodiments described in the present application may be combined with another embodiment.

In the embodiment of the present application, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is not limited in the embodiments of the present application. A battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for packaging one or more battery cells. The box may avoid liquid or other foreign matters to affect charging or discharging of the battery cell.

The battery cell may include an electrode assembly and an electrolytic solution, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive active material layer. The positive active material layer is coated on a surface of the positive electrode current collector, the current collector not coated with the positive active material layer protrudes from the current collector coated with the positive active material layer, and the current collector not coated with the positive active material layer is used as a positive tab. In an example of a lithium-ion battery, the material of the positive electrode current collector may be aluminum, and the positive active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, the current collector not coated with the negative electrode active material layer protrudes from the current collector coated with the negative electrode active material layer, and the current collector not coated with the negative electrode active material layer is used as a negative electrode tab. The material of the negative electrode current collector may be copper, and the negative active material may be graphite, carbon, silicon, or the like. In order to ensure that no fusing occurs when a large current passes, there are a plurality of positive tabs that are stacked together, and there are a plurality of negative tabs that are stacked together. The material of the separator may be polypropylene (PP) or polyethylene (PE), or the like. In addition, the electrode assembly may be a winding structure or a laminated structure, and the embodiments of the present application are not limited thereto.

With the development of the battery technology, it is necessary to consider design factors in multiple aspects simultaneously, for example, performance parameters such as energy density, cycle life.

Batteries, such as lithium-ion batteries, currently have a common problem that a large amount of lithium ions deintercalated from the positive electrode will be consumed in the first charge process to form a solid electrolyte interphase (SEI) film on the surface of the negative electrode. The irreversible consumption of lithium ions at the positive electrode usually exceeds 10% in the first charge process, resulting in relatively low first cycle charge and discharge efficiency, which may only be 50%-77%, thereby reducing the energy density of the battery. On the other hand, the battery will continue to consume active lithium during normal use, resulting in a greatly reduced service life of the battery.

In view of this, an embodiment of the present application provides a battery cell. The battery cell includes at least two electrode assemblies and a lithium replenishing apparatus, where a surface of each electrode assembly of the at least two electrode assemblies includes a curved part, and curved parts of two adjacent electrode assemblies of the at least two electrode assemblies form an accommodating space; and the lithium replenishing apparatus is disposed in the accommodating space. By setting the lithium replenishing apparatus, in this way, the lithium replenishing apparatus can not only replenish the loss of active lithium of a battery including the battery cell during use, improving the service life of the battery, but also replenish the loss of active lithium of the battery during the first charge, increasing the energy density of the battery. Further, the lithium replenishing apparatus is disposed in the accommodating space formed by the curved parts of the two adjacent electrode assemblies, so that the lithium replenishing apparatus does not occupy the internal space of the battery cell, further improving the energy density of the battery.

The technical solutions described in the embodiments of the present application are all applicable to various power consumption devices using batteries.

The power consumption device, for example, may be a vehicle, a mobile phone, a portable device, a notebook computer, a ship, a spacecraft, an electric toy, an electric tool, and the like. The vehicle may be a fuel-powered vehicle, a gas-powered vehicle or a new energy vehicle, and the new energy vehicle may be a battery electric vehicle, a hybrid vehicle, an extended-range vehicle, or the like; the spacecraft includes an airplane, a rocket, a space shuttle, a spaceship, and the like; the electric toy includes a fixed or mobile electric toy, such as a game console, an electric vehicle toy, an electric ship toy, and an electric airplane toy; and the electric tool includes an electric metal cutting tool, an electric grinding tool, an electric assembling tool and an electric railway tool, such as an electric drill, an electric grinder, an electric spanner, an electric screwdriver, an electric hammer, an electric impact drill, an concrete vibrator and an electric planer. The above power consumption device is not specially limited in the embodiments of the present application.

For convenience of description, the following embodiments will be explained by an example that the power consumption device is a vehicle.

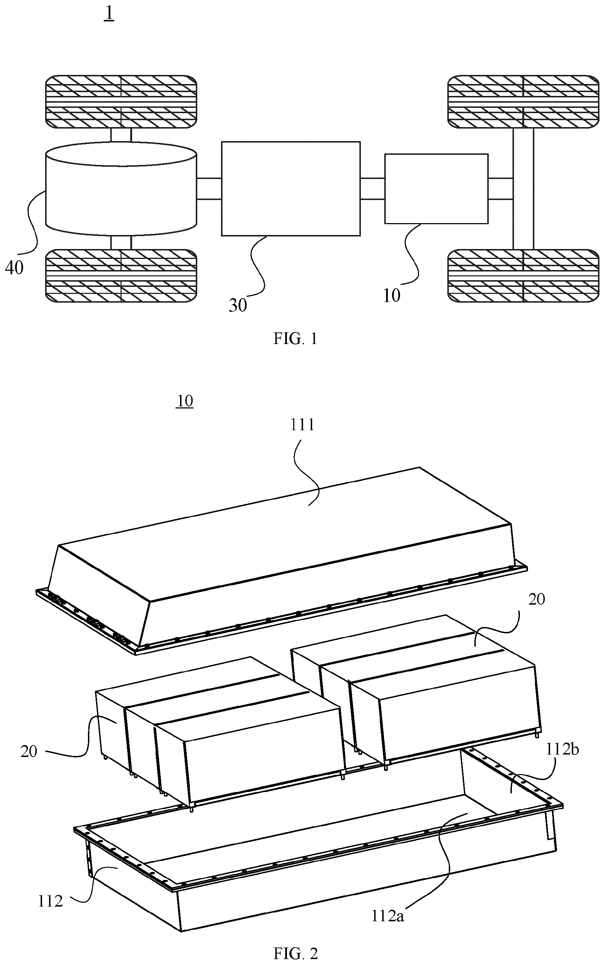

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. The vehicle 1 may be internally provided with a motor 40, a controller 30 and a battery 10, and the controller 30 is configured to control the battery 10 to supply power to the motor 40. For example, the battery 10 may be disposed at the bottom, head or tail of the vehicle 1. The battery 10 may be configured to supply power to the vehicle 1. For example, the battery 10 may be used as an operation power supply of the vehicle 1 for a circuit system of the vehicle 1, for example, for a working power demand of the vehicle 1 during startup, navigation and running. In another embodiment of the present application, the battery 10 may be used not only as an operation power supply of the vehicle 1, but also as a driving power supply of the vehicle 1, replacing or partially replacing fuel or natural gas to provide driving power for the vehicle 1.

In order to meet different power usage demands, the battery may include a plurality of battery cells. The plurality of battery cells may be in series connection, parallel connection or series-parallel connection. The series-parallel connection refers to a combination of series connection and parallel connection. The battery may also be referred to as a battery pack. Optionally, the plurality of battery cells may be in series connection, parallel connection or series-parallel connection first to form a battery module, and then a plurality of battery modules are in series connection, parallel connection or series-parallel connection to form a battery. That is, a plurality of battery cells may directly form a battery, or may first form a battery module, and then battery modules form a battery.

For example, as shown in FIG. 2, FIG. 2 is a schematic structural diagram of a battery 10 according to an embodiment of the present application. The battery 10 may include a plurality of battery cells 20. The battery 10 may further include a box (which is also referred to as a covering), an interior of the box is a hollow structure, and the plurality of battery cells 10 are accommodated in the box. As shown in FIG. 2, the box may include two portions, which are referred to as a first portion 111 and a second portion 112, respectively, and the first portion 111 and the second portion 112 are fastened together. Shapes of the first portion 111 and the second portion 112 may be determined according to a shape of a combination of the plurality of battery cells 20, and the first portion 111 and the second portion 112 may each have an opening. For example, the first portion 111 and the second portion 112 each may be a hollow cuboid and each have only one surface as a surface with an opening, the opening of the first portion 111 is disposed opposite to the opening of the second portion 112, and the first portion 111 and the second portion 112 are fastened to each other to form a box with a closed chamber. The box may include a bottom plate 112a, side plates 112b and a beam. The plurality of battery cells 20 are combined in parallel connection or series connection or series-parallel connection and then placed in the box formed after the first portion 111 and the second portion 112 are fastened.

Optionally, the battery 10 may further include another structure, which will not be repeated redundantly herein. For example, the battery 10 may further include a bus component, and the bus component is configured to implement electrical connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out through an electrically conductive mechanism to pass through the box. Optionally, the electrically conductive mechanism may also belong to the bus component.

According to different power demands, the number of battery cells 20 may be set to any value. The plurality of battery cells 20 may be connected in series, in parallel or in series and parallel to implement a larger capacity or power.

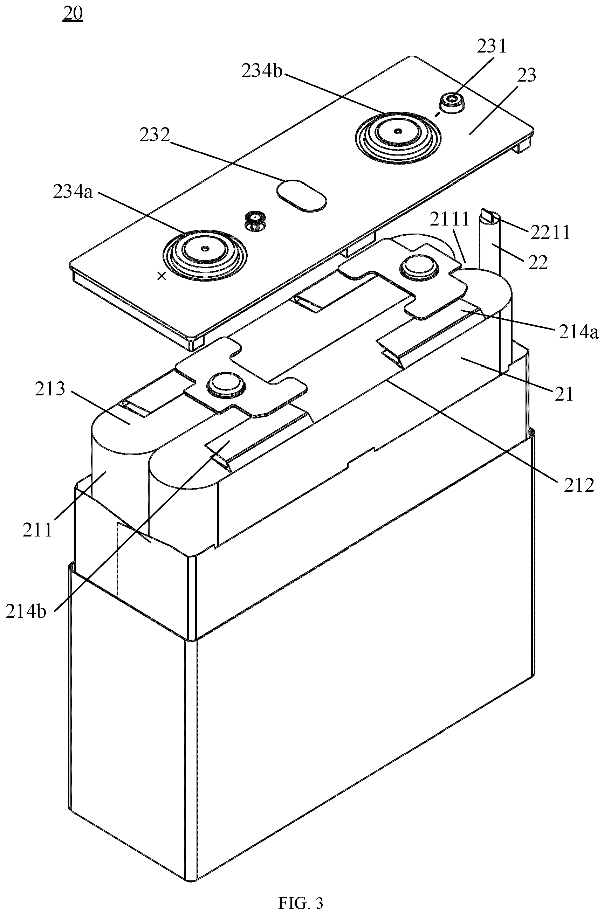

As shown in FIG. 3, FIG. 3 is a schematic structural diagram of a battery cell 20 according to an embodiment of the present application. The battery cell 20 can include at least two electrode assemblies 21 and a lithium replenishing apparatus 22. A surface of each electrode assembly 21 of the at least two electrode assemblies 21 includes a curved part 211, and curved parts 211 of two adjacent electrode assemblies 21 of the at least two electrode assemblies 21 form an accommodating space 2111. At least part of the lithium replenishing apparatus 22 is disposed in the accommodating space 2111.

According to the embodiments of the present application, the battery cell 20 includes a lithium replenishing apparatus 22, so that the lithium replenishing apparatus 22 can not only replenish the loss of active lithium of a battery including the battery cell 20 during use, improving the service life of the battery, but also replenish the loss of active lithium of the battery during the first charge, increasing the energy density of the battery. Further, according to the technical solution, at least part of the lithium replenishing apparatus 22 is disposed in the accommodating space 2111 formed by the curved parts 211 of two adjacent electrode assemblies 21, so that the lithium replenishing apparatus 22 does not occupy the internal space of the battery cell 20, further improving the energy density of the battery.

As an example, the surface of each electrode assembly 21 may only include a curved part 211. That is, the battery cell 20 is a cylindrical battery cell.

As another example, as shown in FIG. 3, in addition to the curved part 211, the surface of each electrode assembly 21 may further include a planar part 212, the planar part 212 is connected with the curved part 211, and planar parts 212 of the two adjacent electrode assemblies 21 are opposite to and connected with each other.

In this case, the battery cell 20 is a prismatic battery cell, such as a blade type battery cell. Setting the battery cell 20 as a blade type battery cell can increase the energy density of the battery cell in the limited space of the battery.

According to the above technical solution, the electrode assembly 21 includes the planar part 212, which not only enables better contact between the planes, but also makes better use of the space of the battery cell 20, and thus, the energy density of the battery can be increased.

Optionally, the lithium replenishing apparatus 22 can be disposed in the accommodating space 2111 by means of welding. Alternatively, the lithium replenishing apparatus 22 can be disposed in the accommodating space 2111 through a connecting member. The connecting member may be but is not limited to a conductive adhesive.

As shown in FIG. 3, the curved parts 211 of two adjacent electrode assemblies 21 can form two accommodating spaces 2111. The lithium replenishing apparatus 22 can be disposed in any one of the two accommodating spaces 2111, or the lithium replenishing apparatuses 22 can be disposed in both the accommodating spaces 2111.

In case that the lithium replenishing apparatuses 22 are be disposed in both the accommodating spaces 2111, the sizes and shapes of the lithium replenishing apparatuses 22 in the two accommodating spaces 2111 can be the same or different, which is not specifically limited in the embodiments of the present application.

Optionally, as shown in FIG. 3, the lithium replenishing apparatus 22 may be cylindrical. The shape of the lithium replenishing apparatus 22 is set to be cylindrical, the cylinder can be more easily disposed in the accommodating space 2111, and the accommodating space 2111 can be utilized to the greatest extent.

Certainly, the lithium replenishing apparatus 22 may also be in other shapes, for example, a rectangle, a circle.

Alternatively, the lithium replenishing apparatus 22 can be a lithium replenishing block, for example, the lithium replenishing apparatus 22 can be a cylindrical lithium replenishing block. The lithium replenishing block has a certain thickness relative to a lithium replenishing sheet. Usually, the thicker the lithium replenishing apparatus 22 is, the better the lithium replenishing effect is. That is, the lithium replenishing ability of the lithium replenishing apparatus 22 can be ensured, and the lithium replenishing effect of the lithium replenishing apparatus 22 is greatly improved.

The lithium replenishing apparatus 22 can be arbitrarily disposed in the accommodating space 2111. For example, when the shape of the lithium replenishing apparatus 22 is cylindrical, the axis of the cylindrical lithium replenishing apparatus 22 and the axes of the at least two electrode assemblies 21 may form a certain angle, such as 90° or an acute angle.

Alternatively, referring to FIG. 3 again, the axis of the cylindrical lithium replenishing apparatus 22 can be parallel to the axes of the at least two electrode assemblies 21. Since the axis of the electrode assembly 21 is relatively long, by setting the axis of the lithium replenishing apparatus 22 to be parallel to the axis of the electrode assembly 21, in this way, the size of the lithium replenishing apparatus 22 can be made as large as possible, which further improves the lithium replenishing effect of the lithium replenishing apparatus 22.

Optionally, the lithium replenishing apparatus 22 can be entirely disposed in the accommodating space 2111.

In this case, in some embodiments, the size of the lithium replenishing apparatus 22 can be smaller than the size of the accommodating space 2111. For example, the size of the lithium replenishing apparatus 22 can be smaller than the size of the electrode assembly 21 along the height direction of the electrode assembly 21.

In some other embodiments, the lithium replenishing apparatus 22 can fill up the accommodating space 2111.

According to the above technical solution, the lithium replenishing apparatus 22 fills up the accommodating space 2111, that is, the size of the lithium replenishing apparatus 22 is maximized without occupying the internal space of the battery cell 20, which avoids the situation of excessive loss of active lithium of the battery cell 20 and insufficient active lithium replenished by the lithium replenishing apparatus 22, greatly improves the lithium replenishing effect of the lithium replenishing apparatus 22, and further effectively improves the performance of the battery.

Optionally, only part of the lithium replenishing apparatus 22 can be disposed in the accommodating space 2111, and the other part of the lithium replenishing apparatus 22 can be disposed outside the accommodating space 2111.

The lithium replenishing apparatus 22 disposed outside the accommodating space 2111 can be disposed between two adjacent electrode assemblies 21. For example, in case that the electrode assembly 21 includes a planar part 212, the lithium replenishing apparatus 22 not disposed in the accommodating space 2111 can be disposed between the planar parts of two adjacent electrode assemblies 21. Exemplarily, the planar part 213 is a side face of the electrode assembly 21 having the largest area.

Alternatively, as shown in FIG. 3 again, each electrode assembly 21 can include a first end face 213 and a second end face (not shown in FIG. 3) opposite to each other, and the first end face 213 is provided with tabs. The lithium replenishing apparatus 22 disposed outside the accommodating space 2111 may be connected with the second end face.

Still alternatively, the lithium replenishing apparatus 22 disposed in the accommodating space 2111 can extend towards the first end face or the second end face, so that the lithium replenishing apparatus protrudes from the accommodating space 2111 in a direction perpendicular to the first end face.

Further, the battery cell 20 may further include an end cover 23, the end cover 23 is disposed towards the first end face 213 and is parallel to the first end face 213, the end cover 23 is provided with a lithium replenishing electrode terminal 231, and the lithium replenishing electrode terminal 231 is connected with the lithium replenishing apparatus 22.

Optionally, the material of the end cover 23 can be metal, such as aluminum or steel.

When the battery cell 20 is a cylindrical battery cell, the shape of the end cover 23 can be circular; and when the battery cell 20 is a prismatic battery cell, the shape of the end cover 23 can be polygonal, such as the rectangle shown in FIG. 3.

According to the above technical solution, by providing a lithium replenishing electrode terminal 231 connected with the lithium replenishing apparatus 22 on the end cover 23, the purpose of replenishing the battery with lithium by the lithium replenishing apparatus 22 can be realized, and further the performance of the battery can be improved.

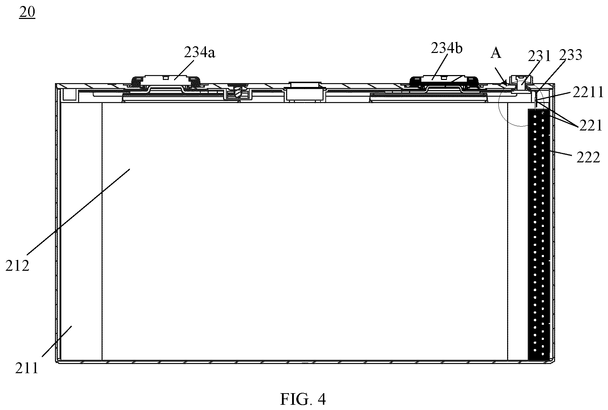

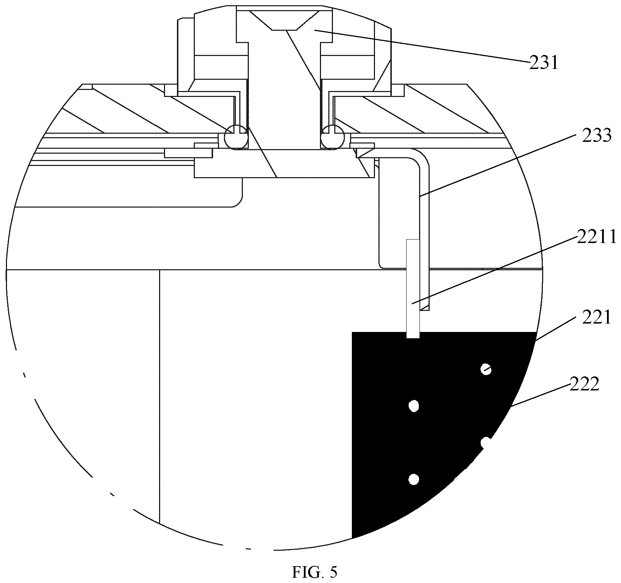

In order to make the lithium replenishing apparatus 22 fully and effectively replenish lithium, as shown in FIG. 4 and FIG. 5, the lithium replenishing apparatus 22 can include a lithium replenishing agent 222, and the lithium replenishing agent 222 is connected with the lithium replenishing electrode terminal 231.

The lithium replenishing agent 222 can be lithium powder, lithium ingot, lithium sheet, lithium alloy, or the like. It should be understood that the capacity of active lithium provided by the lithium replenishing agent 222 is approximately 0.1%-99% of that of negative graphite.

Optionally, the lithium replenishing agent 222 may have a thickness of 0.001mm-4.9mm.

The main function of the lithium replenishing agent 222 is that the metal elemental lithium loses electrons, thereby forming lithium ions. The electrons reach the positive electrode or the negative electrode of the battery through a conductive assembly 221, and the positive active material or the negative active material get the electrons and are reduced. Meanwhile, the lithium ions can undergo an intercalation reaction at the positive electrode or the negative electrode through the ion channel provided by an electrolytic solution, thereby realizing the purpose of transferring active lithium from the lithium replenishing agent 222 to the positive active material or the negative active material, and effectively ensuring the lithium replenishing effect.

There may be a problem that the lithium replenishing agent 222 and the lithium replenishing electrode terminal 231 are not easily electrically connected. Therefore, As shown in FIG. 4 and FIG. 5, in the embodiments of the present application, the lithium replenishing apparatus 22 can further include a conductive assembly 221, and the conductive assembly 221 coats the lithium replenishing agent 222, where the conductive assembly 221 is configured to electrically connect the lithium replenishing agent 223 and the lithium replenishing electrode terminal 231.

The lithium replenishing agent 223 and the conductive assembly 221 can be composited by means of electroplating, mechanical rolling, and the like.

The material of the conductive assembly 221 may be one or more of copper, aluminum, nickel, iron and alloys thereof.

By setting the conductive assembly 221, not only can it be relatively easy to electrically connect the lithium replenishing agent 222 and the lithium replenishing electrode terminal 231, reducing the difficulty of the production process of the battery cell 20, but also electronic channels can be established for the lithium replenishing agent 222, the positive active material and the negative active material, so that the lithium replenishing apparatus 22 can fully play the role of replenishing active lithium.

Optionally, the shape of the conductive assembly 221 can be sheet-like.

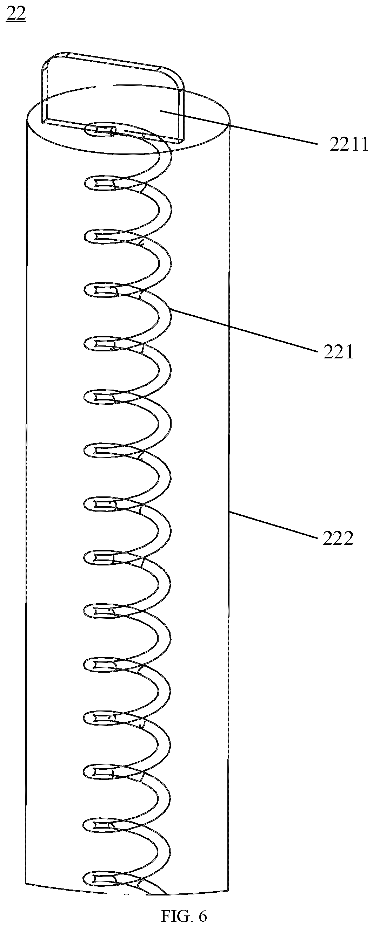

Alternatively, in case that the lithium replenishing apparatus is a lithium replenishing block, as shown in FIG. 6, the shape of the conductive assembly 221 can be helical. According to the technical solution, a helical conductive assembly 221 is adopted, which can increase the contact area between the conductive assembly 221 and the lithium replenishing agent 222, and avoids the problem of the loss of the lithium replenishing ability of the lithium replenishing apparatus 22 due to faults of the lithium replenishing agent 222 and the conductive assembly 221 in the subsequent reaction in the lithium replenishing process.

In some embodiments, a side of the lithium replenishing apparatus 22 facing the end cover 23 is provided with a lead-out end 2211, and the lead-out end 2211 is connected with the lithium replenishing electrode terminal 231.

Specifically, a side of the end cover 23 facing the electrode assembly 21 is provided with a connecting member 233, and the lead-out end 2211 can be electrically connected with the lithium replenishing electrode terminal 231 through the connecting member 233. It should be understood that the connecting member may also be referred to as a current collecting member or another name, which is not specifically limited in the embodiments of the present application.

The shape of the connecting member 233 may be, for example, "L"-shaped as shown in FIG. 5, or may be other shapes.

Exemplarily, referring to FIG. 4, FIG. 5 and FIG. 6 again, an end face of the conductive assembly 221 can be provided with a lead-out end 2211.

In addition to the lithium replenishing electrode terminal 231, in some embodiments, as shown in FIG. 3 and FIG. 4, the end cover 23 can be further provided with a positive electrode terminal 234a and a negative electrode terminal 234b, and the positive electrode terminal 234a and the negative electrode terminal 234b are electrically connected with at least two electrode assemblies 21.

As shown in FIG. 3, each electrode assembly 21 has a first tab 214a and a second tab 214b, and the first tab 214a and the second tab 214b have opposite polarities. For example, when the first tab 214a is a positive tab, the second electrode tab 214b is a negative tab. The first tab 214a of the electrode assembly 21 is connected with one electrode terminal through one connecting member, and the second tab 214b of the electrode assembly 21 is connected with the other electrode terminal through another connecting member. For example, the positive electrode terminal 234a is connected with the positive tab through one connecting member, and the negative electrode terminal 234b is connected with the negative tab through another connecting member.

Given that when the battery cell 20 has sufficient active lithium and does not require lithium replenishment, it may occur that the lithium replenishing apparatus 22 still replenishes the battery cell 20 with lithium, resulting in a waste of resources, in order to avoid this situation, in the embodiments of the application, the lithium replenishing apparatus 22 can replenish the battery cell 20 with lithium when lithium replenishment is required.

In a possible implementation manner, the lithium replenishing electrode terminal 231 can be configured to be short circuited with the positive electrode terminal 234a or the negative electrode terminal 234b when the lithium replenishing apparatus 22 replenishes the battery cell 20 with lithium.

If the active lithium of the positive electrode is insufficient, the lithium replenishing electrode terminal 231 can be short circuited with the positive electrode terminal 234a; and if the active lithium of the negative electrode is insufficient, the lithium replenishing electrode terminal 231 can be short circuited with the negative electrode terminal 234b.

Alternatively, since the active lithium is constantly moving in the electrolytic solution, no matter whether the active lithium of the positive electrode or the negative electrode is insufficient, the lithium replenishing electrode terminal 231 can be configured to be short circuited with a fixed electrode terminal. For example, it is short circuited with the negative electrode terminal 234b.

Since active lithium is relatively easily intercalated at the negative electrode relative to the positive electrode, the lithium replenishing electrode terminal 231 is configured to be short circuited with the negative electrode terminal 234b, which can significantly improve the lithium replenishing efficiency of the lithium replenishing apparatus 22. On the other hand, when the lithium replenishing apparatus 22 replenishes the battery cell 20 with lithium, that is, when the battery cell 20 needs to be replenished with lithium, the lithium replenishing electrode terminal 231 is short circuited with the negative electrode terminal 234b, which avoids the problem of the waste of resources due to the replenishment of the battery cell with lithium by the lithium replenishing apparatus 22 without a need to replenish lithium, thereby realizing the controllable lithium replenishment and on-demand lithium replenishment of the battery cell 20 by the lithium replenishing apparatus 22.

In case that the lithium replenishing electrode terminal 231 is configured to be short circuited with the negative electrode terminal 234b, the lithium replenishing electrode terminal 231 can be disposed on a side of the end cover 23 close to the negative electrode terminal 234b. In this way, the connection line between the lithium replenishing electrode terminal 231 and the negative electrode terminal 234b can be the shortest, which is not only simple for implementation, but also reduces the production costs.

In another possible implementation manner, when lithium replenishment is required, according to the embodiment of the present application, the lithium replenishment of the battery cell 20 by the lithium replenishing apparatus 22 can be implemented through an external control circuit.

Further, the end cover 23 can further include a sealing ring for forming sealing between the lithium replenishing electrode terminal 231 and the end cover 23. Exemplarily, the sealing ring may be ring-shaped, for example.

In addition, the end cover 23 can further include a riveting block and upper plastic, where the riveting block is used to fix the lithium replenishing electrode terminal 231 protruding from the end cover 23, and the lower plastic is used to isolate the end cover 23 from the riveting block.

In addition to the components mentioned above, the end cover 23 may be further provided with a pressure relief mechanism 232. The pressure relief mechanism 232 is configured be actuated when an internal pressure or temperature of the battery cell 20 reaches a threshold, to relieve the internal pressure or temperature. The threshold design varies according to different design requirements. The threshold may depend on the material of one or more of a positive electrode sheet, a negative electrode sheet, an electrolytic solution, and a separator in the battery cell 20. The pressure relief mechanism 232 may take the form of an anti-explosion valve, an air valve, a pressure relief valve, a safety valve, or the like, and may specifically adopt a pressure-sensitive or temperature-sensitive element or structure. That is, when the internal pressure or temperature of the battery cell 20 reaches a predetermined threshold, the pressure relief mechanism 232 performs an action or a weakened structure provided in the pressure relief mechanism 232 is damaged, so as to form an opening or a channel for relieving the internal pressure or temperature.

The "actuation" mentioned in the present application means that the pressure relief mechanism 232 acts or is activated to a certain state, so that the internal pressure and temperature of the battery cell 20 can be relieved. The action generated by the pressure relief mechanism 232 may include but is not limited to: at least a portion of the pressure relief mechanism 232 being fractured, broken, torn or opened, and so on. When the pressure relief mechanism 232 is actuated, high-temperature and high-pressure substances in the interior of the battery cell 20 are discharged outward from an actuated position as emissions. In this way, the pressure of the battery cell 20 can be relieved at a controllable pressure or temperature, thereby avoiding potentially more serious accidents.

The emissions from the battery cell 20 mentioned in the present application include but are not limited to: an electrolytic solution, dissolved or split positive and negative electrode sheets, fragments of a separator, high-temperature and high-pressure gas generated by reaction, flame, or the like.

An embodiment of the present application further provides a battery, and the battery can include the battery cell 20 in the foregoing various embodiments. In some embodiments, the battery can further include other structures such as a box and a bus component, which will not be repeated redundantly herein.

An embodiment of the present application further provides a power consumption apparatus, the power consumption apparatus may include the battery in the foregoing embodiments, and the battery is configured to provide electric energy to the power consumption apparatus.

In some embodiments, the power consumption apparatus may be the vehicle 1 in FIG. 1, a ship or a spacecraft.

Finally, it should be noted that: the above embodiments are merely intended to illustrate the technical solutions of the present application, rather than to limit them. Although the present application has been described in detail with reference to the foregoing embodiments, those of ordinary skill in the art should appreciate that: they can still modify the technical solutions described in the foregoing embodiments, or make equivalent replacements to some of the technical features, but these modifications or replacements do not make the essence of the corresponding technical solutions depart from the spirit and scope of the technical solutions of various embodiments of the present application.

## Claims

1. A battery cell (20), **characterized by**:
at least two electrode assemblies (21), a surface of each electrode assembly (21) of the at least two electrode assemblies (21) comprising a curved part (211), and curved parts (211) of two adjacent electrode assemblies (21) of the at least two electrode assemblies (21) forming an accommodating space (2111); and
a lithium replenishing apparatus (22), at least part of the lithium replenishing apparatus (22) being disposed in the accommodating space (2111).

2. The battery cell (20) according to claim 1, wherein a shape of the lithium replenishing apparatus (22) is cylindrical.

3. The battery cell (20) according to claim 1 or 2, wherein the lithium replenishing apparatus (22) is a lithium replenishing block.

4. The battery cell (20) according to any one of claims 1 to 3, wherein an axis of the lithium replenishing apparatus (22) is parallel to axes of the at least two electrode assemblies (21).

5. The battery cell (20) according to any one of claims 1 to 4, wherein at least part of the lithium replenishing apparatus (22) fills up the accommodating space (2111).

6. The battery cell (20) according to any one of claims 1 to 5, wherein each electrode assembly (21) comprises a first end face (213) and a second end face opposite to each other, the first end face (213) is provided with tabs (214a, 214b), and the battery cell (20) further comprises:
an end cover (23) disposed towards the first end face (213) and parallel to the first end face (213), the end cover (23) being provided with a lithium replenishing electrode terminal (231).

7. The battery cell (20) according to claim 6, wherein the lithium replenishing apparatus (22) comprises a lithium replenishing agent (222), and the lithium replenishing agent (222) is electrically connected with the lithium replenishing electrode terminal (231).

8. The battery cell (20) according to claim 7, wherein the lithium replenishing apparatus (22) further comprises a conductive assembly (221), and the conductive assembly coats the lithium replenishing agent, wherein the conductive assembly (221) is configured to electrically connect the lithium replenishing agent (223) and the lithium replenishing electrode terminal (231).

9. The battery cell (20) according to claim 8, wherein a shape of the conductive assembly (221) is helical.

10. The battery cell (20) according to any one of claims 6 to 9, wherein a side of the lithium replenishing apparatus (22) facing the end cover (23) is provided with a lead-out end (2211), and the lead-out end (2211) is connected with the lithium replenishing electrode terminal (231).

11. The battery cell (20) according to any one of claims 6 to 10, wherein the end cover (23) is further provided with a negative electrode terminal (234b), and the negative electrode terminal (234b) is connected with the at least two electrode assemblies (21);
wherein the lithium replenishing electrode terminal (231) is configured to be short circuited with the negative electrode terminal (234b) when the lithium replenishing apparatus (22) replenishes the battery cell (20) with lithium.

12. The battery cell (20) according to claim 11, wherein the lithium replenishing electrode terminal (231) is disposed on a side of the end cover (23) close to the negative electrode terminal (234b).

13. The battery cell (20) according to any one of claims 1 to 12, wherein the surface of each electrode assembly (21) further comprises a planar part (212), the planar part (212) is connected with the curved part (211), and planar parts (212) of the two adjacent electrode assemblies (21) are opposite to and connected with each other.

14. A battery, comprising:
the battery cell (20) according to any one of claims 1 to 13; and
a box, the box being configured to accommodate the battery cell (20).

15. A power consumption apparatus, comprising: the battery according to claim 14, the battery being configured to provide electric energy.
